# EUROPÄISCHE PATENTSCHRIFT

(11) **EP 3 368 414 B1**
(45) Veröffentlichungstag und Bekanntmachung des Hinweises auf die Patenterteilung: **19.05.2021**
(21) Anmeldenummer: 16788070.7
(22) Anmeldetag: 25.10.2016
(51) Int. Cl.: B64C 39/02, B64D 9/00, B64F 1/32

(54) **VERFAHREN ZUM BELADEN UND/ODER ENTLADEN EINER TRANSPORTEINRICHTUNG AN EINEM AUFNAHMEBEHÄLTER**
METHOD FOR LOADING AND/OR UNLOADING A TRANSPORT DEVICE AT A RECEIVING CONTAINER
PROCÉDÉ DE CHARGEMENT ET/OU DE DÉCHARGEMENT D'UN DISPOSITIF DE TRANSPORT SUR UN CONTENANT DE RÉCEPTION

(30) Priorität: 29.10.2015 DE 102015118478; 12.11.2015 DE 102015119544
(43) Veröffentlichungstag der Anmeldung: 05.09.2018
(73) Patentinhaber: Deutsche Post AG, 53113 Bonn (DE)
(72) Erfinder: PRUSKI, Matthäus, 53844 Troisdorf (DE); VORWERK, Felix, 53173 Bonn (DE); DAUTZ, Christoph, 53175 Bonn (DE)
(74) Vertreter: Michalski Hüttermann & Partner Patentanwälte mbB
(86) Internationale Anmeldenummer: PCT/EP2016/075639
(87) Internationale Veröffentlichungsnummer: WO 2017/072101

(56) Entgegenhaltungen:
- CA-A1- 2 815 850
- US-A1- 2014 032 034
- US-A1- 2015 175 276
- US-B1- 8 899 903

## Beschreibung

Die Erfindung betrifft gemäß dem Hauptanspruch ein Verfahren zum Beladen einer an einem Aufnahmebehälter gelandeten unbemannten Transporteinrichtung mit einem Nutzlastbehälter für eine Sendung und mit einer Ladeeinrichtung zum Beladen der Transporteinrichtung mit dem Nutzlastbehälter, wobei die Transporteinrichtung an ihrer Unterseite eine Ladeöffnung zum Aufnehmen des Nutzlastbehälters aufweist. Zudem betrifft die Erfindung gemäß dem Nebenanspruch ein Verfahren zum Entladen der an dem Aufnahmebehälter gelandeten unbemannten Transporteinrichtung mit dem Nutzlastbehälter für die Sendung und der Ladeeinrichtung zum Entladen des Nutzlastbehälters aus der Transporteinrichtung, wobei die Transporteinrichtung an ihrer Unterseite eine Ladeöffnung aufweist, in der der Nutzlastbehälter angeordnet ist, sowie gemäß einen weiterem Nebenanspruch den Aufnahmebehälter eingerichtet zum Durchführen des Verfahrens.

Infolge steigenden Güterverkehrs durch Stück- und Sammelgutfahrten, LKW- oder Containertransporte, See- oder Luftfrachtpakettransporte im Rahmen von e-Commerce und Online-Versandhandelsangeboten, hat sich die Anzahl von Transportgütern und insbesondere von Paketsendungen und Sendungen signifikant erhöht. Zwar ist es heutzutage möglich, dass eine Bestellung unabhängig von herkömmlichen Ladenöffnungszeiten Online getätigt werden kann, die Lieferung der Bestellung als Sendung an den Empfänger erfolgt fast ausschließlich mittels klassischer Zustellverfahren, beispielsweise durch Briefträger oder im Falle von Paketsendungen durch motorisierte Zustellfahrzeuge, und im Wesentlichen nur innerhalb der Ladenöffhungszeiten. Ist der Empfänger bei der Lieferung nicht anzutreffen, beispielsweise weil er als Berufstätiger innerhalb der Ladenöffnungszeiten seiner Arbeit nachgeht, wird entweder versucht, die Sendung ein weiteres Mal zuzustellen, oder die Sendung wird in einer Filiale des Zustellunternehmens zur Abholung durch den Empfänger hinterlegt. Zwar besteht seit einiger Zeit die Möglichkeit, Sendungen an einem Sammelpunkt zu hinterlegen, beispielsweise in einer DHL-Packstation, allerdings sind derartige Sammelpunkte noch nicht flächendeckend verfügbar und somit nicht in jedem Fall eine Alternative.

In jüngster Zeit sind daher Versuche unternommen worden, Sendungen mittels unbemannter Transporteinrichtungen, beispielsweise mit einem unbemannten Fluggerät, auch Paketkopter oder Drohne genannt, an den Empfänger oder den Sammelpunkt zu liefern. Bei diesen Versuchen wird regelmäßig ein Aufnahmebehälter zum Aufnehmen der Sendung verwendet, an den die Transporteinrichtung die Sendung überbringen kann bzw. von dem die Transporteinrichtung die Sendung abholen kann. Nachdem die Sendung durch die Transporteinrichtung an den Aufnahmebehälter überbracht worden ist, welcher beispielsweise im Vorgarten eines Hauses des Empfängers aufgestellt ist oder für einen Stadtbezirk für eine Mehrzahl Empfänger vorgesehen ist, kann die Sendung auch außerhalb der Ladenöffhungszeiten dem Aufnahmebehälter entnommen werden.

WO 2014/080389 A2 beschreibt eine autonome Bodenstation zum Entgegennehmen einer mittels einer flugfähigen unbemannten Transporteinrichtung transportierten Sendung.

US 2010 / 0 012 769 A1 beschreibt ein Senkrechtstart-und-landeluftfahrzeug mit einer Flugzeugzelle, die entlang einer Längsachse der Flugzeugzelle einen Frachttunnel begrenzt, wobei der Frachttunnel mit einer ersten Fläche an einen Ladungscontainer angrenzt und sich wenigstens teilweise entlang einer zweiten Seite und entlang einer dritten Seite des Ladungscontainers erstreckt.

US 8 899 903 B1 beschreibt ein System zum Laden und Entladen von Material von einem Fahrzeug umfassend eine Fahrzeugbasisstation und eine Anordnung zum autonomen Be- und Entladen von Material aus dem Fahrzeug.

US 2015/175276 A1 beschreibt ein Liefergerät für ein unbemanntes Luftfahrzeug (UAV).

Bei den vorgenannten Versuchen hat sich die eigentliche Übergabe der Sendung von der unbemannten Transporteinrichtung an den Aufnahmebehälter als besonders schwierig erwiesen. Beispielsweise ist ein "Abwerfen" der Sendung von der Transporteinrichtung an den Aufnahmebehälter nicht möglich, um zerbrechliche Sendungen nicht zu beschädigen.

Ausgehend von dieser Situation ist es eine Aufgabe der vorliegenden Erfindung, eine Sendung in sicherer Weise zwischen einer unbemannten Transporteinrichtung und einem Aufnahmebehälter zu übergeben.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe durch ein Verfahren zum Beladen einer an einem Aufnahmebehälter gelandeten unbemannten Transporteinrichtung mit einem Nutzlastbehälter für eine Sendung gelöst, mit einer Ladeeinrichtung zum Beladen der Transporteinrichtung mit dem Nutzlastbehälter, wobei der Nutzlastbehälter an seinem ersten Ende ein Auflager aufweist, die Transporteinrichtung an ihrer Unterseite eine Ladeöffnung zum Aufnehmen des Nutzlastbehälters aufweist, und die Ladeöffnung an ihrem vorderen Ende eine zu dem Auflager korrespondierende Gegenkontur aufweist, und das Verfahren die Schritte aufweist:
Verschwenken des auf der Ladeeinrichtung angeordneten Nutzlastbehälters gegenüber der Horizontalen durch die Ladeeinrichtung derart, dass das erste Ende gegenüber einem zweiten, gegenüberliegenden Ende des Nutzlastbehälters erhöht ist,
Anheben der Ladeeinrichtung, bis dass der Nutzlastbehälter wenigstens mit seinem ersten Ende innerhalb und/oder unterhalb der Ladeöffnung zu liegen kommt, und
Verschwenken des Nutzlastbehälters durch die Ladeeinrichtung in die Horizontale zum Einführen in die Ladeöffnung derart, dass zunächst das Auflager in insbesondere berührenden Eingriff mit der Gegenkontur gelangt und daraufhin das zweite Ende des Nutzlastbehälter in insbesondere berührenden Eingriff mit einem hinteren Ende der Ladeöffnung gelangt.

Ein wesentlicher Punkt der Erfindung liegt in dem Nutzlastbehälter, in dem die Sendung durch die Ladeeinrichtung von dem Aufnahmebehälter an die Transporteinrichtung übergeben wird. Das Übergeben des Nutzlastbehälters erfolgt durch eine nicht rein lineare Bewegung, nämlich zunächst durch ein Anheben des auf der Ladeeinrichtung angeordneten Nutzlastbehälters hin zu der Transporteinrichtung, bis dass wenigstens dieser mit seinem ersten Ende innerhalb oder unterhalb der Transporteinrichtung zu liegen kommt. Daraufhin beginnt die Ladeeinrichtung, den Nutzlastbehälter in die Horizontale zu verschwenken. Durch die Verschwenkbewegung wird zunächst das Auflager in die Gegenkontur eingeführt und gelangt dadurch in insbesondere berührenden Eingriff mit der Gegenkontur, so dass das erste Ende des Nutzlastbehälters gegen Herausfallen aus der Transporteinrichtung gesichert wird. Nachdem der Nutzlastbehälter mittels der Ladeeinrichtung vollständig in die Horizontale verschwenkt ist, liegt auch das zweite Ende des Nutzlastbehälters insbesondere berührend an dem hinteren Ende der Ladeöffnung an. Der Nutzlastbehälter ist nun vollständig in die Ladeöffnung eingesetzt, so dass die Transporteinrichtung den Aufnahmebehälter in Richtung eines Ziels verlassen kann. Experimentell hat sich das vorgeschlagene Verfahren als besonders zuverlässig erwiesen, um auch zerbrechliche Sendungen zwischen dem Aufnahmebehälter und der Transporteinrichtung übergeben zu können.

Die unbemannte Transporteinrichtung ist vorzugsweise als Fluggerät, als unbemanntes Luftfahrzeug, englisch als unmanned, uninhabited oder unpiloted aerial vehicle, abgekürzt UAV, als Paketkopter oder als Drohne ausgestaltet. Mögliche Ausprägungsformen der Transporteinrichtung können Helikopter, Multikopter, Quadrokopter oder Tiltwing sein, um nur einige Möglichkeiten aufzuzählen. Bevorzugt weisen die Transporteinrichtung und/oder der Aufnahmebehälter mechanische und/oder informationstechnologische Einrichtungen auf, die die Transporteinrichtung und/oder den Aufnahmebehälter zur Ausführung des Verfahrens befähigen, so insbesondere zum automatischen und/oder autonomen Ausführen des Verfahrens. Die Transporteinrichtung und/oder der Aufnahmebehälter kann einen Mikroprozessor, eine Steuerungseinrichtung und/oder eine speicherprogrammierbare Steuerung aufweisen, die mit einem Softwareprogramm zur Ausführung der Verfahrensschritte und/oder über Kommunikationseinrichtungen zur drahtgebundenen und/oder drahtlosen Kommunikation zwischen der Transporteinrichtung und dem Aufnahmebehälter verfügen. Die Sendung ist beispielsweise eine Postsendung, ein Paket, ein Einschreiben, ein Brief oder sonstiges transportables Gut. Die vorgeschlagenen Schritte werden bevorzugt in der genannten Reihenfolge ausgeführt, wobei es jedoch ebenso möglich ist, dass zunächst das Anheben der Ladeeinrichtung und danach das Verschwenken des Nutzlastbehälters gegenüber der Horizontalen erfolgt, oder die Schritte zum Teil gleichzeitig ausgeführt werden.

Bevorzugt weist der Nutzlastbehälter an seinem ersten Ende zwei zueinander beabstandete Auflager auf, während an der Ladeöffnung dazu korrespondierend zwei Gegenkonturen vorgesehen sind. Die Ladeöffnung erstreckt sich vorzugsweise in das Innere der Transporteinrichtung derart hinein, dass der vollständig in die Ladeöffnung eingesetzte Nutzlastbehälter die Ladeöffnung vollständig ausfüllt und/oder formschlüssig in bzw. an der Ladeöffnung anliegt. Im Falle eines sich in Draufsicht ovalartigen und/oder rechteckartigen erstreckenden Nutzlastbehälters ist das Auflager bevorzugt an der ersten Querseite angeordnet, so dass beim Anheben und/oder Verschwenken der Ladeeinrichtung der Nutzlastbehälter zuerst mit seiner ersten Querseite in die Ladeöffnung eingeführt wird. Ebenso kann es möglich sein, dass der Nutzlastbehälter durch die Ladeeinrichtung bis unterhalb der Ladeöffnung angehoben wird und das darauf folgende Verschwenken des Nutzlastbehälters in die Horizontale eine Bewegung in vertikale Richtung nach oben in die Ladeöffnung hinein und/oder ein Verkippen des Nutzlastbehälters umfasst.

Nach einer bevorzugten Weiterbildung umfasst das Verfahren nach dem Einführen des Nutzlastbehälters in die Ladeöffnung den Schritt Verriegeln des zweiten Endes des Nutzlastbehälters mit der Transporteinrichtung durch die Ladeeinrichtung, wobei das Verriegeln insbesondere mittels Drehen einer an dem zweiten Ende des Nutzlastbehälters angeordneten Verrieglungseinrichtung erfolgt, und/oder nach dem Einführen des Nutzlastbehälters in die Ladeöffnung den Schritt Absenken der Ladeeinrichtung, bis dass die Ladeeinrichtung innerhalb des Aufnahmebehälters angeordnet ist. Nach dem Verriegeln des Nutzlastbehälters ist dieser an dem ersten Ende durch das in die Gegenkontur eingreifende Auflager gehalten und an seinem zweiten Ende mittels der verriegelten Verriegelungseinrichtung gegen Herausfallen aus der Ladeöffnung gesichert. Die Verriegelungseinrichtung weist bevorzugt einen Drehkörper auf, der zum Verriegeln aus dem Nutzlastbehälter mittels einer Drehbewegung in die Transporteinrichtung einführbar ist. Zum positionsgenauen Ausrichten der Verriegelungseinrichtung in Bezug auf die Transporteinrichtung ist bevorzugt an dem zweiten Ende des Nutzlastbehälters in der Nutzlastöffnung eine Führung vorgesehen, die bei der Verschwenkbewegung in die Horizontale in einen Längsspant oder dergleichen der Transporteinrichtung eingreift und derart eine Führung bewirkt. Durch das Absenken der Ladeeinrichtung und des gegebenenfalls darauf folgenden Schließens einer Luke des Aufnahmebehälters ist die Ladeeinrichtung innerhalb des Aufnahmebehälters gegen Verschmutzung durch äußere Einflüsse geschützt. An einer Oberseite des Nutzlastbehälters kann ein Rasthaken angeordnet sein, welche durch die Verschwenkbewegung in einen weiteren Längsspant oder dergleichen der Transporteinrichtung eingreift. Bevorzugt sind zwei beabstandete Rasthaken vorgesehen, die in den gleichen weiteren Längsspant eingreifen. Der Rasthaken ist bevorzugt mittig entlang der Längserstreckung des Nutzlastbehälters an diesem angeordnet.

Nach einer besonders bevorzugten Weiterbildung ist der Nutzlastbehälter und/oder die Ladeöffnung derart ausgestaltet, dass während des Verschwenkens in die Horizontale und/oder in der Horizontale wenigstens das erste Ende des Nutzlastbehälters formschlüssig an wenigstens dem vorderen Ende der Ladeöffnung anliegt. Beim Einführen des Nutzlastbehälters in die Ladeöffnung schwenkt der Nutzlastbehälter gegenüber der Transporteinrichtung über eine Drehachse in die Ladeöffnung ein. Die Drehachse entsteht selbständig durch das Heranführen des Nutzlastbehälters an die Ladeöffnung durch den genannten Formschluss. Beim nachfolgend beschriebenen Entladen des Nutzlastbehälters aus der Transporteinrichtung löst sich die Drehachse entsprechend selbständig wieder auf. Bedingt durch das Eigengewicht des Nutzlastbehälters löst sich beim Entladen das Auflager in analoger Weise aus der Gegenkontur.

Nach einer bevorzugten Weiterbildung weist die Ladeeinrichtung korrespondierend zu dem ersten Ende und/oder zu dem zweiten Ende des Nutzlastbehälters einen Dorn auf, weist die Transporteinrichtung an dem vorderen Ende und/oder an dem hinteren Ende eine zu dem jeweiligen Dorn korrespondierende Buchse auf, und erfolgt das Anheben der Ladeeinrichtung derart, bis dass der Dorn insbesondere berührend in die Buchse eingreift. Bevorzugt sind drei oder vier Dornen bzw. Buchsen vorgesehen, beispielsweise jeweils eine bzw. zwei beabstandet zueinander an dem vorderen Ende und/oder eine bzw. zwei an dem hinteren Ende, insbesondere eine vorne und zwei hinten. Durch die Dornen bzw. Buchsen wird in vorteilhafter Weise sichergestellt, dass das Anheben der Ladeeinrichtung mit darauf angeordnetem Nutzlastbehälter positionsgenau erfolgt, nämlich bis dass der Dorn insbesondere berührend in die Buchse eingreift, so dass daraufhin das Verschwenken des Nutzlastbehälters in die Ladeöffnung ebenso positionsgenau erfolgen kann. Weiterhin werden derart Toleranzen zwischen Ladeeinrichtung und Transporteinrichtung ausgeglichen, die sich nach jedem Flug bzw. Landen mit der Zeit verändern können. Es ist daher sinnvoll, die Transporteinrichtung zunächst beispielsweise wenige Millimeter anzuheben und erst dann die Be- bzw. Entladung durchzuführen.

Zur elektrischen Kontaktierung von Nutzlastbehälter und Transporteinrichtung weist der Nutzlastbehälter nach einer bevorzugten Weiterbildung an seinem ersten Ende einen derart angeordneten ersten Stecker und die Ladeöffnung an ihrem vorderen Ende ein zu dem ersten Stecker korrespondierend derart angeordneten zweiten Stecker auf, dass durch Verschwenken des Nutzlastbehälters in die Horizontale die Stecker miteinander verbunden werden. Zur Ausgestaltung der Stecker existieren grundsätzlich verschiedene Möglichkeiten, wo jedoch bevorzugt an dem Nutzlastbehälter zum einen eine vierzehnpolige Buchse sowie zum anderen eine zwanzigpolige Buchse und entsprechend innerhalb der Ladeöffnung korrespondierend dazu ein vierzehnpoliger Stecker sowie ein zwanzigpoliger Stecker angeordnet sind.

Experimentell hat es sich nach einer noch anderen Weiterbildung als besonders vorteilig erwiesen, wenn der zweite Stecker an der Ladeöffnung derart schwimmend gelagert ist, dass der zweite Stecker in Steckrichtung starr und orthogonal zur Steckrichtung elastisch angeordnet ist. Sofern der erste Stecker starr an dem Nutzlastbehälter angeordnet ist, beispielsweise mit diesem verschraubt ist, lassen sich aufgrund der elastischen Lagerung beim Verschwenken des Nutzlastbehälters in die Horizontale Toleranzen in horizontaler und vertikaler Richtung zwischen den Steckern in vorteilhafter Weise beim Verbinden der Stecker ausgleichen.

In diesem Zusammenhang hat es sich als besonders vorteilig erwiesen, wenn nach einer bevorzugten Weiterbildung der erste Stecker eine derart ausgestaltete Zapfenplatte und der zweite Stecker eine derart ausgestaltete Zapfenaufnahme aufweist, dass durch Verschwenken des Nutzlastbehälters in die Horizontale der Zapfen durch die Zapfenaufnahme derart geführt wird, dass zunächst eine Toleranz zwischen den Steckern verringert und daraufhin eine positionsgenaue Ausrichtung der Stecker zueinander erfolgt. Die den Zapfen aufweisende Zapfenplatte kann oberhalb auf den ersten Stecker aufgeklebt sein. Die Zapfenaufnahme ist bevorzugt nach Art eines Überstandes ausgeführt und weist mittig einen sich verengenden Schlitz auf, in den beim Verschwenken des Nutzlastbehälters der Zapfen eingeführt und durch die Verengung zunächst positionsgenau "gefangen" und daraufhin bis hin zur Horizontalen geführt wird, wodurch sich während des Verbindens der Stecker die positionsgenaue Ausrichtung des Stecker einstellt. Experimentell hat sich als vorteilig erwiesen, wenn der zweite Stecker gegenüber der Horizontalen geringfügig beispielsweise um 5° verschwenkt hin zur Unterseite angeordnet ist. Dadurch wird das Verbinden der Stecker bei der Verschwenkbewegung des Nutzlastbehälters in die Ladeöffnung vereinfacht. Sofern im Rahmen der Erfindung von "oberhalb", "unterhalb" oder dergleichen gesprochen wird, ist damit immer die Lage des betreffenden Merkmals im Betrieb und insbesondere bei auf dem Aufnahmebehälter gelandeter Transporteinrichtung gemeint.

Die Aufgabe der Erfindung wird zudem durch ein Verfahren zum Entladen einer an einem Aufnahmebehälter gelandeten unbemannten Transporteinrichtung mit einem Nutzlastbehälter für eine Sendung gelöst, mit einer Ladeeinrichtung zum Entladen des Nutzlastbehälters aus der Transporteinrichtung, wobei der Nutzlastbehälter an seinem ersten Ende ein Auflager aufweist, die Transporteinrichtung an ihrer Unterseite eine Ladeöffnung aufweist, in der der Nutzlastbehälter angeordnet ist, und die Ladeöffnung an ihrem vorderen Ende eine zu dem Auflager korrespondierende Gegenkontur aufweist, in die das Auflager insbesondere berührend eingreift, und das Verfahren die Schritte aufweist:
Anheben der Ladeeinrichtung, bis dass die Ladeeinrichtung unterhalb der Ladeöffnung an dem Nutzlastbehälter insbesondere berührend zu liegen kommt,
Entriegeln des Nutzlastbehälters an einem zweiten, gegenüberliegenden Ende desselben,
Verschwenken des Nutzlastbehälters gegenüber der Horizontalen durch die Ladeeinrichtung derart, dass das zweite Ende gegenüber dem ersten Ende des Nutzlastbehälters abgesenkt wird, bis dass das Auflager nicht mehr in die Gegenkontur eingreift,
Absenken des Nutzlastbehälters gegenüber der Transporteinrichtung durch die Ladeeinrichtung, und/oder
Verschwenken des Nutzlastbehälters in die Horizontale durch die Ladeeinrichtung.

Ebenso wie beim zuvor beschriebenen Verfahren zum Beladen findet auch beim vorgeschlagenen Verfahren zum Entladen des Nutzlastbehälters aus der Transporteinrichtung keine rein lineare Bewegung des Nutzlastbehälters statt, sondern zuerst ein Verschwenken des Nutzlastbehälters aus der Horizontalen und darauf folgendes Absenken des Nutzlastbehälters zum Entladen des Nutzlastbehälters aus der Transporteinrichtung in den Aufnahmebehälter herein. Versuche haben ergeben, dass durch die vorgeschlagenen Verfahren zum Beladen und Entladen Nutzlastbehälter in besonders sicherer und zuverlässiger Weise zwischen der Transporteinrichtung und dem Aufnahmebehälter übergeben werden können.

Grundsätzlich existieren verschiedene Möglichkeiten, wie die Ladeeinrichtung zum Verschwenken des Nutzlastbehälters und zum Verriegeln bzw. Entriegeln des Nutzlastbehälters an der Transporteinrichtung ausgestaltet sein kann. Nach einer besonders bevorzugten Weiterbildung ist vorgesehen, dass die Ladeeinrichtung einen Kippzylinder zum Verschwenken des Nutzlastbehälters und/oder einen Aktor zum Entriegeln und/oder Verriegeln des Nutzlastbehälters an und/oder von der Transporteinrichtung aufweist. Der Kippzylinder ist bevorzugt in die Ladeeinrichtung integriert, welche in weiter bevorzugter Weise eine Aufnahme zum insbesondere formschlüssigen Aufnehmen des Nutzlastbehälters aufweist. Die Aufnahme ist durch den Kippzylinder bevorzugt aus der Horizontalen und wieder zurück in die Horizontale verschwenkbar. Der Aktor umfasst bevorzugt ein motorisiertes Werkzeug, welches in vertikaler Richtung an den Nutzlastbehälter zum Entriegeln bzw. Verriegeln der Verriegelungseinrichtung heranführbar ist.

Nach einer anderen bevorzugten Weiterbildung umfasst das Verfahren die Schritte Entnehmen und/oder Abstellen des Nutzlastbehälters aus und/oder in einer Lagerposition und/oder einem Lademodul durch die Ladeeinrichtung, Öffnen und/oder Schließen einer Luke an einer Landeplattform des Aufnahmebehälters zum Landen der Transporteinrichtung an dem Aufnahmebehälter, und/oder positionsgenaues Fixieren der gelandeten unbemannten Transporteinrichtung an dem Aufnahmebehälter, insbesondere durch eine Längs- und/oder Querführung. Bevorzugt weist der Aufnahmebehälter eine Mehrzahl Lagerpositionen auf, in denen leere Nutzlastbehälter oder bereits mit einer Sendung gefüllte Nutzlastbehälter lagerbar sind. Die Lagerpositionen sind bevorzugt innerhalb des Aufnahmebehälters gegen Witterungseinflüsse geschützt angeordnet. Die Ladeeinrichtung ist bevorzugt weitergebildet, den Nutzlastbehälter in der Lagerposition abzustellen und/oder aus der Lagerposition zum Beladen der Transporteinrichtung zu entnehmen.

Das Lademodul ist bevorzugt ausgestaltet, dass ein Bediener eine Sendung in den Nutzlastbehälter einlegen kann.

An dem Aufnahmebehälter kann beispielsweise eine Türöffnung vorgesehen sein, durch die hindurch der Bediener die Sendung in den in dem Aufnahmebehälter vorgehaltenen Nutzlastbehälter einführen kann. Durch eine Lichtschranke ist prüfbar, ob die Sendung in vorschriftsmäßiger Weise in den Nutzlastbehälter eingelegt ist. Zudem kann eine Waage vorgesehen sein, mittels derer prüfbar ist, ob die Sendung ein maximal zulässiges Gewicht des Nutzlastbehälters überschritten hat. Ebenso kann eine Prüfung auf nicht zulässigen Inhalt wie Sprengstoff etc. mittels eines Röntgengeräts oder dergleichen durchgeführt werden. Nachdem der Nutzlastbehälter an dem Lademodul beladen und/oder entladen ist, kann die Ladeeinrichtung den Nutzlastbehälter einerseits in der Lagerposition zwischenlagern oder eine an dem Aufnahmebehälter gelandete Transporteinrichtung mit dem Nutzlastbehälter beladen. In einer weiteren Ausgestaltung wird Sendung über ein Transportsystem zu einem entsprechenden Nutzlastbehälter befördert. Zudem kann der Barcode der Sendung gescannt werden und daraufhin automatisch eine Zuordnung zu einem Nutzlastbehälter stattfinden. Ebenso kann ein Lagerverwaltungssystem vorgesehen sein, welches wiederrum der Transporteinrichtung mitteilt, an welche Packstation geflogen werden soll. Schließlich kann es auch möglich sein, dass nach dem Entladen des Nutzlastbehälters eine SMS an den Empfänger der Sendung geschickt wird.

Die Luke ist bevorzugt in einem Dach des Aufnahmebehälters vorgesehen und öffnet sich automatisch, wenn sich die Transporteinrichtung im Anflug zu dem Aufnahmebehälter befindet. Beispielsweise kann der Aufnahmebehälter eine als Luke ausgestaltete Kuppel umfassen, die sich zum Landen der Transporteinrichtung öffnet. Nachdem die Transporteinrichtung an dem Aufnahmebehälter gelandet ist, kann sich die Luke schließen und nach erfolgter Beladung wieder öffnen, damit die Transporteinrichtung den Aufnahmebehälter fliegend verlassen kann. Nach Verlassen der Transporteinrichtung schließt sich die Luke bevorzugt, damit die Landeplattform, die Ladeeinrichtung und/oder das Innere des Nutzlastbehälters gegen Witterungseinflüsse wie Regen, Wind oder Schnee geschützt ist. Die Luke öffnet sich bevorzugt in einem 180° Winkel, damit keine Luftströme auf der Landeplattform entstehen.

Die Längs- und/oder Querführung ist bevorzugt ausgestaltet, die gelandete Transporteinrichtung positionsgenau über der Ladeeinrichtung zu fixieren. Sofern beispielsweise die Transporteinrichtung auf einer Landeplattform mit einem Durchmesser von 3 m gelandet ist, verschiebt die Längs- und/oder Querführung die Transporteinrichtung von dem Landepunkt hin zu einer Öffnung, durch die die Ladeeinrichtung das Be- und/oder Entladen des Nutzlastbehälters bewerkstelligt. Um die Transporteinrichtung vor dem Wegfliegen von dem Aufnahmebehälter in Windrichtung zu drehen, ist der Aktuator bzw. die Landeeinrichtung bevorzugt um 360° drehbar ausgestaltet. Die Längs- und/oder Querführung fixiert bevorzugt die Transporteinrichtung unmittelbar nach dem Landen. Die Fixierung erfolgt je nach Landeposition der Transporteinrichtung bevorzugt mindestens an einem Kufenende bzw. maximal an zwei Kufenenden bei einer 90° Ausrichtung des Landegestells zur Längs- und/oder Querführung, bis die Längs- und/oder Querführung zusammengeführt wird und alle 4 Kufenenden fixiert. An der Längs- und/oder Querführung sind bevorzugt sogenannte "Pfeile oder Dreiecke" angeordnet, beispielsweise 2 Stück, wodurch die Transporteinrichtung automatisch durch eine mechanische Lösung in einer der vier 90° Richtungen (90°/180°/270°/360°) drehbar ist.

Nach einer bevorzugten Weiterbildung weist der Nutzlastbehälter an seinem ersten Ende ein Nasenlager auf und die Ladeöffnung an ihrem vorderen Ende eine zu dem Nasenlager korrespondierende Nasenkontur. In Verbindung mit zwei Auflagern bildet das Nasenlager in vorteilhafter Weise bevorzugt mit entsprechend zwei Gegenkorrekturen in der Transporteinrichtung eine Drehachse, wobei durch das Nasenlager einseitig vertikale und beidseitig horizontale Kräfte aufnehmbar sind und durch die Auflager eine vertikale Abstützung in Gegenrichtung erfolgen kann. Durch eine derartige Ausgestaltung lässt sich einerseits erreichen, dass der Nutzlastbehälter beim Einschwenken in die Ladeöffnung besonders positionsgenau an derartiger fixierbar ist und andererseits der Nutzlastbehälter während des Transports durch die Transporteinrichtung in sicherer und verlässlicher Weise an der Transporteinrichtung fixiert ist.

Nach einer bevorzugten Weiterbildung erfolgt das Verschwenken um einen Winkel von ≥ 5° und ≤ 50°, vorzugsweise ≥ 10° und ≤ 30° und ganz besonders bevorzugt um einen Winkel von 12°. Experimentell hat sich gezeigt, dass der zuvor beschriebene Formschluss über einen Drehwinkel von annähernd 12° aufrechterhalten werden kann, wodurch sich die Beladung der Transporteinrichtung mit dem Nutzlastbehälter als besonders einfach gestaltet.

Zur Ausgestaltung des Nutzlastbehälters existieren grundsätzlich verschiedene Möglichkeiten. Nach einer besonders bevorzugten Weiterbildung ist jedoch vorgesehen, dass der Nutzlastbehälter eine Batterie für eine Stromversorgung der unbemannten Transporteinrichtung aufweist und der Aufnahmebehälter eine Einrichtung zum Aufladen der Batterie aufweist. Neben der Sendung ist in dem Nutzlastbehälter somit auch die Batterie für die Stromversorgung der Transporteinrichtung vorgesehen, beispielsweise ein Akkumulator oder dergleichen. Das Aufladen der Batterie kann beispielsweise in der Lagerposition erfolgen, so dass nach einem Austausch des Nutzlastbehälters die Transporteinrichtung mit einer aufgeladenen Batterie unmittelbar losfliegen kann. Die elektrische Verbindung zwischen Batterie und Transporteinrichtung erfolgt bevorzugt durch die zuvor beschriebenen Stecker. Neben dem Laden der Batterie kann auch ein kontinuierliche Überwachung der Spannung stattfinden. Zudem kann ein automatischer Batteriewechsel der Batterien stattfinden. Derart wäre ein Nutzlastbehälter gegeben, der mit Sendungen und mit Batterien beispielsweise über Förderbänder beladbar ist, bevor der gesamte Nutzlastbehälter in die Transporteinrichtung geladen wird.

Der Nutzlastbehälter ist bevorzugt an seiner Außenseite mit einem Schalenelement derart ausgestaltet, dass durch das Schalenelement bei vollständig in die Ladeöffnung eingesetztem Nutzlastbehälter eine Dichtung nach Art eines Labyrinthprinzips ausgebildet wird und eindringendes Wasser an einer Außenschale des Nutzlastbehälters abgeführt wird. Die Batterie einschließlich der dafür benötigten Verkabelung hin zu dem Stecker ist bevorzugt vor Spritzwasser geschützt.

Ein zur Durchführung des zuvor beschriebenen Verfahrens geeigneter Aufnahmebehälter könnte ausgestaltet sein als Briefkasten, Paketkasten, Paketbriefkasten und/oder Packstation zum Aufnehmen der Sendung und/oder als mobile Varianten wie LKW, Wechselbrücke oder Schiff. An einem Gehäuse des Nutzlastbehälters ist bevorzugt die vorgenannte Türöffnung vorgeschrieben, durch die ein Benutzer Zugriff auf das Lademodul zum Entnehmen und/oder Beladen des Nutzlastbehälters mit der Sendung hat.

Nachfolgend wird die Erfindung unter Bezugnahme auf die anliegenden Zeichnungen anhand einer bevorzugten Ausführungsform näher erläutert.

Es zeigen:
- Fig. 1: ein Inneres eines Aufnahmebehälters in einer schematischen Ansicht gemäß einer bevorzugten Ausführungsform der Erfindung,
- Fig. 2: einen Nutzlastbehälter in einer schematischen Ansicht gemäß der bevorzugten Ausführungsform der Erfindung,
- Fig. 3: eine Ladeeinrichtung mit Nutzlastbehälter und Transporteinrichtung in einer schematischen Ansicht gemäß der bevorzugten Ausführungsform der Erfindung,
- Fig. 4: eine weitere Ansicht zu Fig. 3,

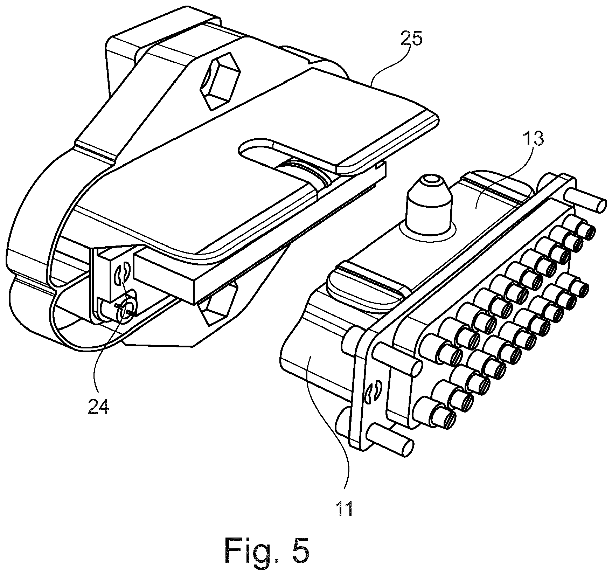

- Fig. 5: eine Steckerverbindung zwischen Nutzlastbehälter und Transporteinrichtung in einer schematischen Ansicht gemäß der bevorzugten Ausführungsform der Erfindung,
- Fig. 6: eine verschließbare Öffnung in dem Aufnahmebehälter gemäß Fig. 1,
- Fig. 7: die Ladeeinrichtung gemäß Fig. 3 in einer weiteren Ansicht, und
- Fig. 8: eine Draufsicht auf den Aufnahmebehälter gemäß Fig. 1

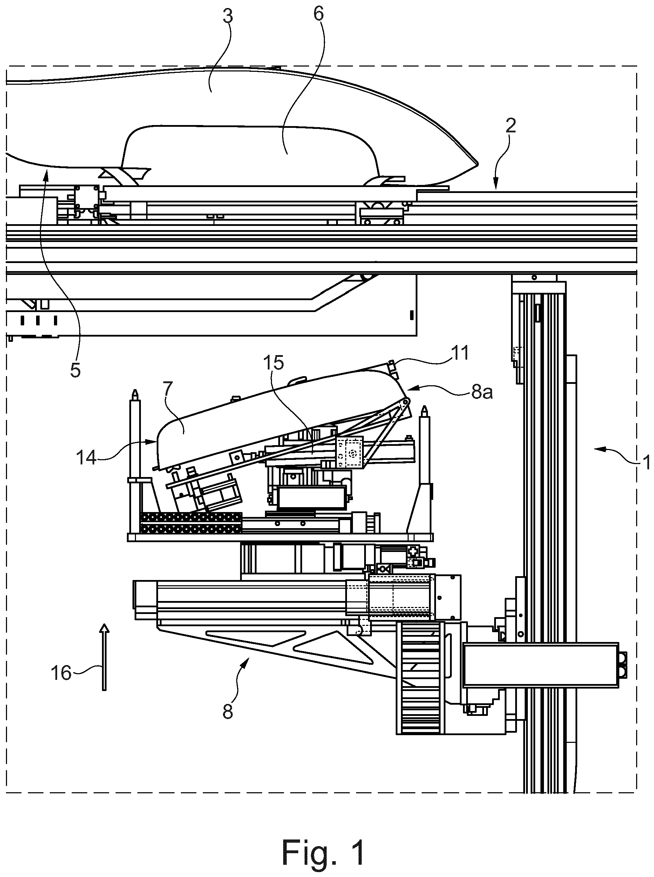

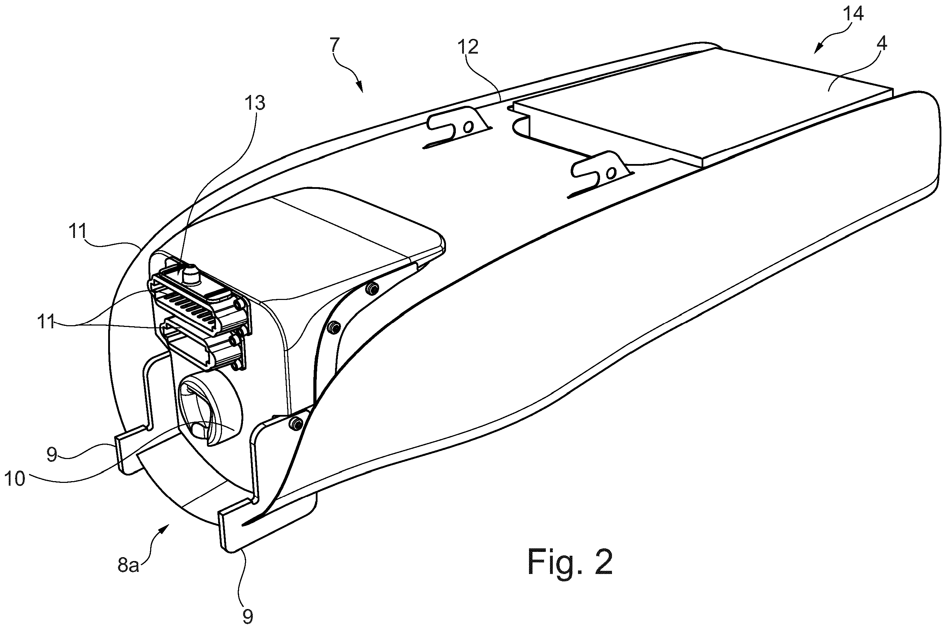

Fig. 1 zeigt eine schematische Ansicht eines Inneren eines als Paketstation ausgestalteten Aufnahmebehälters. Auf einer Landeplattform 2 des Aufnahmebehälters 1 ist eine unbemannte Transporteinrichtung 3 gelandet. Die unbemannte Transporteinrichtung 3 ist als selbststeuernde Drohne, vorliegend Paketkopter genannt, ausgeführt und weist einen Antrieb auf, um eine Sendung 4, gezeigt in Fig. 2, von dem Aufnahmebehälter 2 hin zu einem nicht gezeigten Empfänger zu transportieren. An der Unterseite 5 der Transporteinrichtung ist eine Ladeöffnung 6 vorgesehen, in die ein Nutzlastbehälter 7 für die Sendung 4 einführbar ist. Zum Einführen des Nutzlastbehälters 7 in die Ladeöffnung 6 bzw. zum Herausnehmen des Nutzlastbehälters 7 aus der Ladeöffnung 6 ist in dem Aufnahmebehälter 1 eine Ladeeinrichtung 8, auch Belademanipulator genannt, vorgesehen.

Fig. 2 zeigt eine perspektivische Ansicht des Nutzlastbehälters 7, welcher in Draufsicht eine rechteckartige Form aufweist. An einem ersten querseitigen Ende 8a sind zwei zueinander beabstandete Auflager 9 vorgesehen, die sich in Längserstreckung des Nutzlastbehälters 7 parallel zueinander von dem Nutzlastbehälter 7 weg erstrecken. Mittig zwischen den beiden Auflagern 9 ist an der ersten Seite 8a des Nutzlastbehälters 7 ein Nasenlager 10 angeordnet sowie zwei erste Stecker 11, die vorliegend als vierzehnpolige Buchse sowie als zwanzigpolige Buchse ausgeführt sind. In Richtung Oberschale 12 des Nutzlastbehälters 7 ist beabstandet zu den Auflagern 9 an dem oberen der beiden ersten Stecker 11 eine Zapfenplatte 13 vorgesehen, deren Zapfen sich senkrecht zur Steckrichtung der ersten Stecker 11 von den Auflagern 9 weg erstreckt.

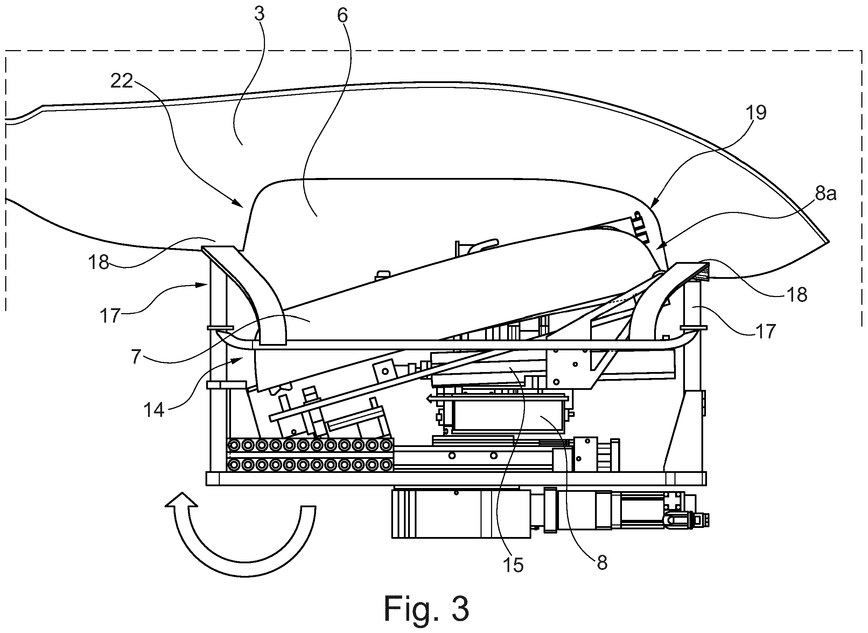

Zum Beladen der Transporteinrichtung 3 mit dem Nutzlastbehälter 7 verschwenkt die Ladeeinrichtung 8 den Nutzlastbehälter 7 gegenüber der Horizontalen in die in Fig. 1 gezeigte Position, so dass das erste Ende 8a gegenüber einem zweiten, gegenüberliegenden Ende 14 erhöht ist. Zum Verschwenken weist die Ladeeinrichtung 8 einen Kippzylinder 15 auf. Die unterhalb der Ladeöffnung 6 befindliche Ladeeinrichtung 8 bewegt sich daraufhin, angedeutet durch Pfeil 16, in Richtung Transporteinrichtung 9 bis dass, wie in Fig. 3 gezeigt, an der Ladeeinrichtung 8 vorgesehene Dorne 17 in korrespondierende Buchsen 18 der Transporteinrichtung 3 eingreifen. An der Ladeeinrichtung 8 sind dazu korrespondierend zu dem ersten Ende 8a sowie zu dem zweiten Ende 14 jeweils zwei beabstandete Dorne 17 vorgesehen, die in korrespondierende Buchsen 18 an der Unterseite 5 der Transporteinrichtung 3 eingreifen.

Nachdem die Ladeeinrichtung 8 derart an der Transporteinrichtung 3 fixiert ist, wird der Nutzlastbehälter 7, der durch das Anheben an seinem ersten Ende 8a bereits zum Teil in die Ladeöffnung 6 hereinreicht, in die Horizontale verschwenkt. Durch das Verschwenken gelangt zunächst das Auflager 9 in berührenden Eingriff mit einer einem vorderen Ende der Ladeöffnung 8 zu dem Auflager 9 korrespondierenden Gegenkontur 20. Korrespondierend zu dem Nasenlager 10 ist an dem vorderen Ende 19 der Ladeöffnung 6 eine Nasenkontur 21 ausgebildet, in die das Nasenlager 10 berührend eingreift.

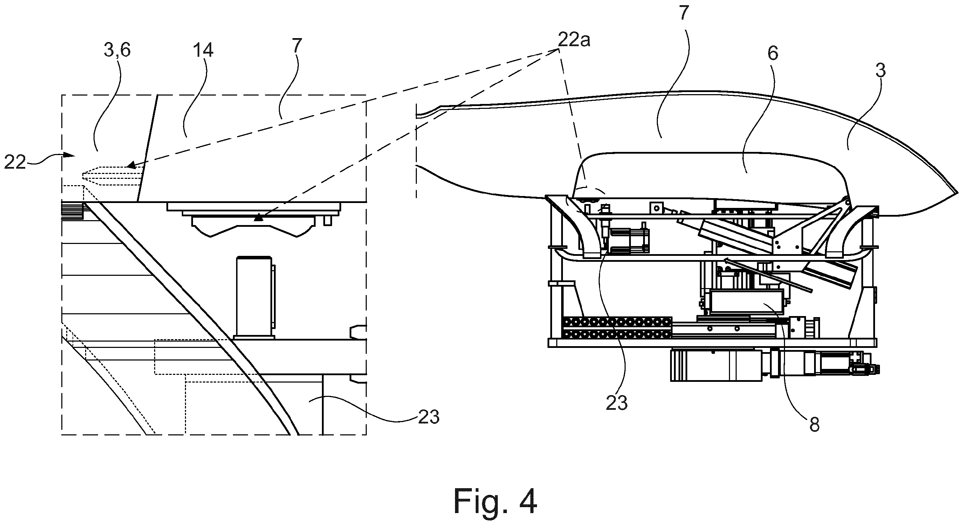

Die Lager 9, 10 sowie die dazu korrespondierenden Konturen 20, 21 sind derart ausgebildet, dass über einen Drehwinkel von etwa 12° ein Formschluss zwischen Nutzlastbehälter 7 und Ladeöffnung 6 aufrechterhalten wird, bis dass nach vollständigem Verschwenken des Nutzlastbehälters 7 in die Horizontale das zweite Ende 14 des Nutzlastbehälters in berührendem Eingriff mit einem hinteren Ende 22 der Ladeöffnung 6 ist. Derart ist der Nutzlastbehälter 7 vollständig und formschlüssig in der Ladeöffnung 6 aufgenommen, wie aus Fig. 4 ersichtlich. Der Nutzlastbehälter 7 wird also nicht in einer rein linearen Bewegung, sondern über eine an dem ersten Ende 8a bzw. dem vorderen Ende 9 ausgebildete Drehachse in die Ladeöffnung 6 eingeschwenkt.

Zum Verriegeln des Nutzlastbehälters 7 mit der Transporteinrichtung 3 ist an dem zweiten Ende 14 eine Verriegelungseinrichtung 22 vorgesehen. Zum Betätigen der Verriegelungseinrichtung 22 weist die Ladeeinrichtung einen Aktor 23 auf, der über ein Werkzeug in die Verriegelungseinrichtung 22 eingreift und mittels einer Drehbewegung das zweite Ende 14 des Nutzlastbehälters 7 an dem hinteren Ende 22 der Ladeöffnung mit dieser verriegelt.

Korrespondierend zu dem ersten Stecker 11 ist an dem vorderen Ende 19 in der Ladeöffnung 6 ein zweiter Stecker 24 derart angeordnet, dass durch Verschwenken des Nutzlastbehälters 7 in die Horizontale der erste Stecker 11 in den zweiten Stecker 24 eingeführt wird. Um Toleranzen zwischen dem Nutzlastbehälter 7 und der Ladeöffnung 6 auszugleichen, ist der zweite Stecker 24 an der Ladeöffnung 6 schwimmend derart gelagert, dass der zweite Stecker 24 in Steckrichtung starr und orthogonal zur Steckrichtung elastisch gelagert ist. Korrespondierend zu der Zapfenplatte 13 ist an dem zweiten Stecker 24 eine Zapfenaufnahme 25 angeordnet, die beim Verschwenken des Nutzlastbehälters 7 in die Horizontale zunächst den Zapfen "fängt", um daraufhin den Zapfen zwecks positionsgenauer Ausrichtung der Stecker 11, 24 zueinander zu führen. Damit der erste Stecker 11 besonders einfach in den zweiten Stecker 24 einführbar ist, ist der zweite Stecker 24 gegenüber der Horizontalen um 5° angewinkelt.

Das Entladen eines Nutzlastbehälters 7 aus einer auf dem Aufnahmebehälter 1 gelandeten Transporteinrichtung 3 erfolgt analog. Zunächst wird die Ladeeinrichtung 7 angehoben, bis dass diese unterhalb der Ladeöffnung 6 berührend an dem Nutzlastbehälter 7 zu liegen kommt. Daraufhin wird mittels des Aktors 23 die Verriegelungseinrichtung 22a entriegelt. Daraufhin wird der Nutzlastbehälter 7 gegenüber der Horizontalen derart verschwenkt, dass das zweite Ende 14 gegenüber dem ersten Ende 8a abgesenkt wird, bis das Auflager 9 nicht mehr berührend in die Gegenkontur 20 eingreift. Der derart auf der Ladeeinrichtung 8 aufliegende Nutzlastbehälter 9 wird sodann gegenüber der Transporteinrichtung 3 in den Aufnahmebehälter 1 hinein durch die Ladeeinrichtung 8 abgesenkt und schließlich in die Horizontale verschwenkt.

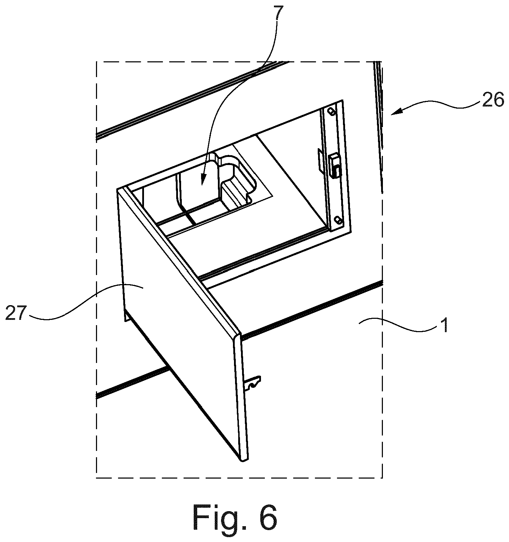

Die Ladeeinrichtung 8 befördert den Nutzlastbehälter 7 mit darin angeordneter Sendung 4 zu einem Lademodul 26, gezeigt in Fig. 6, welches an einer Außenwand des Aufnahmebehälters 1 angeordnet ist. In der Außenwand ist eine verschließbare Öffnung 27 vorgesehen, durch die ein Bediener hindurch in den Aufnahmebehälter 1 greifen und derart die in Fig. 6 nicht gezeigte Sendung 4 aus dem Nutzlastbehälter 7 entnehmen kann. Ebenso ist es möglich, eine neue Sendung 4 in den Nutzlastbehälter 7 einzulegen.

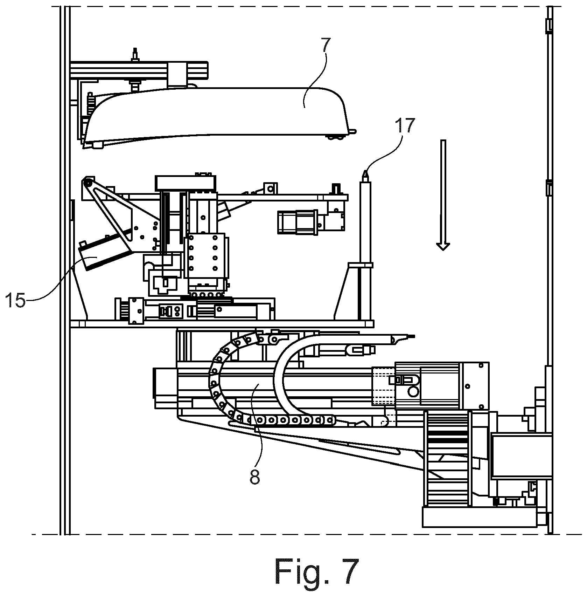

Mittels der in Fig. 7 in weiterer Ansicht gezeigten Ladeeinrichtung 8 kann der Nutzlastbehälter 7 innerhalb des Aufnahmebehälters 1 zudem einer Mehrzahl Lagerpositionen abgestellt werden, in denen leere Nutzlastbehälter 7 oder bereits mit einer Sendung 4 beladene Nutzlastbehälter 7 zwischengelagert werden können. So können Nutzlastbehälter 7 sukzessive mit Sendungen 4 beladen werden oder durch Transporteinrichtungen 3 von dem Aufnahmebehälter 1 weg transportiert werden.

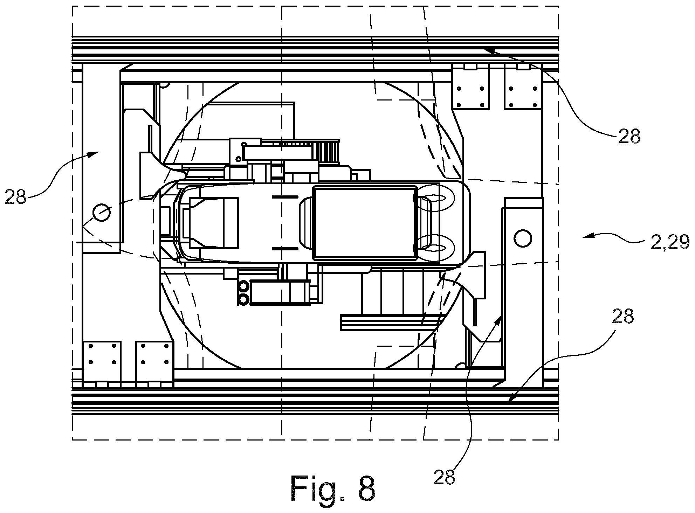

Um ein positionsgenaues Fixieren der auf dem Aufnahmebehälter 1 gelandeten Transporteinrichtung 3 zu ermöglichen, sind Längs- und/oder Querführungen 28 vorgesehen, mittels derer die Transporteinrichtung 3 oberhalb der Ladeeinrichtung 8 ausrichtbar ist, wie in Fig. 8 in Draufsicht gezeigt. Oberhalb der Landeplattform 2 ist an dem Aufnahmebehälter 1 eine Luke 29 vorgesehen, die sich zum Landen bzw. Wegfliegen der Transporteinrichtung 3 an bzw. von dem Aufnahmebehälter 1 öffnen bzw. schließen lässt.

**Bezugszeichenliste**

| | |
|---|---|
| Aufnahmebehälter | 1 |
| Landeplattform | 2 |
| Unbemannte Transporteinrichtung | 3 |
| Sendung | 4 |
| Unterseite | 5 |
| Ladeöffnung | 6 |
| Nutzlastbehälter | 7 |
| Ladeeinrichtung | 8 |
| Erstes Ende | 8a |
| Auflager | 9 |
| Nasenlager | 10 |
| Erster Stecker | 11 |
| Oberschale | 12 |
| Zapfenplatte | 13 |
| Zweites Ende | 14 |
| Kippzylinder | 15 |
| Pfeil | 16 |
| Dorn | 17 |
| Buchse | 18 |
| Vorderes Ende | 19 |
| Gegenkontur | 20 |
| Nasenkontur | 21 |
| Hinteres Ende | 22 |
| Verriegelungseinrichtung | 22a |
| Aktor | 23 |
| Zweiter Stecker | 24 |
| Zapfenaufnahme | 25 |
| Lademodul | 26 |
| Öffnung | 27 |
| Längs- und/oder Querführung | 28 |
| Luke | 29 |

## Patentansprüche

1. Verfahren zum Beladen einer an einem Aufnahmebehälter (1) gelandeten unbemannten Transporteinrichtung (3) mit einem Nutzlastbehälter (7) für eine Sendung (4), mit einer Ladeeinrichtung (8) zum Beladen der Transporteinrichtung (3) mit dem Nutzlastbehälter (7), wobei der Nutzlastbehälter (7) an seinem ersten Ende (8a) ein Auflager (9) aufweist, die Transporteinrichtung (3) an ihrer Unterseite (5) eine Ladeöffnung (6) zum Aufnehmen des Nutzlastbehälters (7) aufweist, und die Ladeöffnung (6) an ihrem vorderen Ende (19) eine zu dem Auflager (9) korrespondierende Gegenkontur (20) aufweist, und das Verfahren die Schritte aufweist:
Verschwenken des auf der Ladeeinrichtung (8) angeordneten Nutzlastbehälters (7) gegenüber der Horizontalen durch die Ladeeinrichtung (8) derart, dass das erste Ende (8a) gegenüber einem zweiten, gegenüberliegenden Ende (14) des Nutzlastbehälters (7) erhöht ist,
Anheben der Ladeeinrichtung (8), bis dass der Nutzlastbehälter (7) wenigstens mit seinem ersten Ende (8a) innerhalb und/oder unterhalb der Ladeöffnung (6) zu liegen kommt, und
Verschwenken des Nutzlastbehälters (7) durch die Ladeeinrichtung (8) in die Horizontale zum Einführen in die Ladeöffnung (6) derart, dass zunächst das Auflager (9) in Eingriff mit der Gegenkontur (20) gelangt und daraufhin das zweite Ende (14) des Nutzlastbehälter (7) in Eingriff mit einem hinteren Ende (22) der Ladeöffnung (6) gelangt.

2. Verfahren nach dem vorhergehenden Anspruch, mit dem Schritt:
nach dem Einführen des Nutzlastbehälters (7) in die Ladeöffnung (6), Verriegeln des zweiten Endes des Nutzlastbehälters (7) mit der Transporteinrichtung (3) durch die Ladeeinrichtung (8), und/oder
nach dem Einführen des Nutzlastbehälters (7) in die Ladeöffnung (6), Absenken der Ladeeinrichtung (8), bis dass die Ladeeinrichtung (8) innerhalb des Aufnahmebehälter (1) angeordnet ist.

3. Verfahren nach einem der vorhergehenden Ansprüche, wobei der Nutzlastbehälter (7) und/oder die Ladeöffnung (6) derart ausgestaltet ist, dass während des Verschwenkens in die Horizontale und/oder in der Horizontale wenigstens das erste Ende (8a) des Nutzlastbehälters (7) formschlüssig an wenigstens dem vorderen Ende (19) der Ladeöffnung (6) anliegt.

4. Verfahren nach einem der vorhergehenden Ansprüche, wobei die Ladeeinrichtung (8) korrespondierend zu dem ersten Ende (8a) und/oder zu dem zweiten Ende (14) des Nutzlastbehälters (7) einen Dorn (17) aufweist, die Transporteinrichtung (3) an dem vorderen Ende (19) und/oder an dem hinteren Ende (22) eine zu dem jeweiligen Dorn (17) korrespondierende Buchse (18) aufweist, und das Anheben der Ladeeinrichtung (8) erfolgt, bis dass der Dorn (17) in die Buchse (18) eingreift.

5. Verfahren nach einem der vorhergehenden Ansprüche, wobei der Nutzlastbehälter (7) an seinem ersten Ende (8a) einen derart angeordneten ersten Stecker (11) und die Ladeöffnung (6) an ihrem vorderen Ende (19) ein zu dem ersten Stecker (11) korrespondieren derart angeordneten zweiten Stecker (24) aufweisen, dass durch Verschwenken des Nutzlastbehälters (7) in die Horizontale die Stecker (11, 24) miteinander verbunden werden.

6. Verfahren nach dem vorhergehenden Anspruch, wobei der zweite Stecker (24) an der Ladeöffnung (6) derart schwimmend gelagert ist, dass der zweite Stecker (24) in Steckrichtung starr und orthogonal zur Steckrichtung elastisch gelagert ist.

7. Verfahren nach einem der beiden vorhergehenden Ansprüche, wobei der erste Stecker (11) eine derart ausgestaltete Zapfenplatte (13) und der zweite Stecker (24) eine derart ausgestaltete Zapfenaufnahme (25) aufweist, dass durch Verschwenken des Nutzlastbehälters (7) in die Horizontale der Zapfen durch die Zapfenaufnahme (25) derart geführt wird, dass zunächst eine Toleranz zwischen den Steckern (11, 24) verringert und daraufhin eine positionsgenaue Ausrichtung der Stecker (11, 24) zueinander erfolgt.

8. Verfahren zum Entladen einer an einem Aufnahmebehälter (1) gelandeten unbemannten Transporteinrichtung (3) mit einem Nutzlastbehälter (7) für eine Sendung (4), mit einer Ladeeinrichtung (8) zum Entladen des Nutzlastbehälters (7) aus der Transporteinrichtung (3), wobei der Nutzlastbehälter (7) an seinem ersten Ende (8a) ein Auflager (9) aufweist, die Transporteinrichtung (3) an ihrer Unterseite (5) eine Ladeöffnung (6) aufweist, in der der Nutzlastbehälter (7) angeordnet ist, und die Ladeöffnung (6) an ihrem vorderen Ende (19) eine zu dem Auflager (9) korrespondierende Gegenkontur (20) aufweist, in die das Auflager (9) eingreift, und das Verfahren die Schritte aufweist:
Anheben der Ladeeinrichtung (8), bis dass die Ladeeinrichtung (8) unterhalb der Ladeöffnung (6) an dem Nutzlastbehälter (7) zu liegen kommt,
Entriegeln des Nutzlastbehälters (7) an einem zweiten, gegenüberliegenden Ende (14) desselben,
Verschwenken des Nutzlastbehälters (7) gegenüber der Horizontalen durch die Ladeeinrichtung (8) derart, dass das zweite Ende (14) gegenüber dem ersten Ende (8a) des Nutzlastbehälters (7) abgesenkt wird, bis dass das Auflager (9) nicht mehr in die Gegenkontur (20) eingreift,
Absenken des Nutzlastbehälters (7) gegenüber der Transporteinrichtung (3) durch die Ladeeinrichtung (8), und
Verschwenken des Nutzlastbehälters (7) in die Horizontale durch die Ladeeinrichtung (8).

9. Verfahren einem der vorhergehenden Ansprüche, wobei die Ladeeinrichtung (8) einen Kippzylinder (15) zum Verschwenken des Nutzlastbehälters (7) und/oder einen Aktor (23) zum Entriegeln und/oder Verriegeln des Nutzlastbehälters (7) an und/oder von der Transporteinrichtung (3) aufweist.

10. Verfahren nach einem der vorhergehenden Ansprüche, mit den Schritten:
Entnehmen und/oder Abstellen des Nutzlastbehälters (7) aus und/oder in einer Lagerposition und/oder einem Lademodul (26) durch die Ladeeinrichtung (8),
Öffnen und/oder Schließen einer Luke (29) an einer Landeplattform (2) des Aufnahmebehälters (1) zum Landen der Transporteinrichtung (3) an dem Aufnahmebehälter (1), und/oder
positionsgenaues Fixieren der gelandeten unbemannten Transporteinrichtung (3) an dem Aufnahmebehälter (1).

11. Verfahren nach einem der vorhergehenden Ansprüche, wobei der Nutzlastbehälter (7) an seinem ersten Ende (8a) ein Nasenlager (10) aufweist und die Ladeöffnung (6) an ihrem vorderen Ende (19) eine zu dem Nasenlager (10) korrespondierende Nasenkontur (21) aufweist.

12. Verfahren nach einem der vorhergehenden Ansprüche, wobei das Verschwenken um einen Winkel von ≥ 5° und ≤ 50° erfolgt.

13. Verfahren nach einem der vorhergehenden Ansprüche, wobei der Nutzlastbehälter (7) eine Batterie für eine Stromversorgung der unbemannten Transporteinrichtung (3) aufweist und der Aufnahmebehälter (1) eine Einrichtung zum Aufladen der Batterie aufweist.

## Claims

1. Method for loading an unmanned transport device (3), docked on a receiving container (1), with a payload container (7) for a consignment (4), having a loading device (8) for loading the transport device (3) with the payload container (7), wherein the payload container (7) has at its first end (8a) a bearing means (9), the transport device (3) has on its underside (5) a loading opening (6) for receiving the payload container (7), and the loading opening (6) has at its front end (19) a mating contour (20) corresponding to the bearing means (9), and the method comprises the steps:
pivoting of the payload container (7) disposed on the loading device (8) in relation to the horizontal by the loading device (8) such that the first end (8a) is elevated in relation to a second, opposite end (14) of the payload container (7),
raising of the loading device (8) until the payload container (7) ends up, at least with its first end (8a), within and/or beneath the loading opening (6), and
pivoting of the payload container (7) into the horizontal by the loading device (8) for introduction into the loading opening (6) such that firstly the bearing means (9) enters into engagement with the mating contour (20), and subsequently the second end (14) of the payload container (7) enters into engagement with a rear end (22) of the loading opening (6).

2. Method according to the preceding claim, comprising the step:
after the introduction of the payload container (7) into the loading opening (6), locking of the second end of the payload container (7) to the transport device (3) by the loading device (8), and/or
after the introduction of the payload container (7) into the loading opening (6), lowering of the loading device (8) until the loading device (8) is disposed within the receiving container (1).

3. Method according to one of the preceding claims, wherein the payload container (7) and/or the loading opening (6) is designed such that, during the pivoting into the horizontal and/or in the horizontal, at least the first end (8a) of the payload container (7) bears positively against at least the front end (19) of the loading opening (6).

4. Method according to one of the preceding claims, wherein the loading device (8) has, correspondingly to the first end (8a) and/or to the second end (14) of the payload container (7), a spindle (17), the transport device (3) has at the front end (19) and/or at the rear end (22) a bushing (18) corresponding to the respective spindle (17), and the raising of the loading device (8) is realized until the spindle (17) engages in the bushing (18) .

5. Method according to one of the preceding claims, wherein the payload container (7) has at its first end (8a) a first plug (11) arranged such that, and the loading opening (6) has at its front end (19) a second plug (24) arranged correspondingly to the first plug (11) such that, by pivoting of the payload container (7) into the horizontal, the plugs (11, 24) are connected one to the other.

6. Method according to the preceding claim, wherein the second plug (24) is floatingly supported at the loading opening (6) such that the second plug (24) is supported rigidly in the plug-in direction and elastically orthogonally to the plug-in direction.

7. Method according to one of the two preceding claims, wherein the first plug (11) has a pin plate (13) designed such that, and the second plug (24) has a pin receptacle (25) designed such that, by pivoting of the payload container (7) into the horizontal, the pin is guided by the pin receptacle (25) such that firstly a tolerance between the plugs (11, 24) is reduced, and subsequently a positionally accurate orientation of the plugs (11, 24) one to the other is realized.

8. Method for unloading an unmanned transport device (3), docked on a receiving container (1), with a payload container (7) for a consignment (4), having a loading device (8) for unloading the payload container (7) from the transport device (3), wherein the payload container (7) has at its first end (8a) a bearing means (9), the transport device (3) has on its underside (5) a loading opening (6), in which the payload container (7) is disposed, and the loading opening (6) has at its front end (19) a mating contour (20) which corresponds to the bearing means (9) and in which the bearing means (9) engages, and the method comprises the steps:
raising of the loading device (8) until the loading device (8) ends up beneath the loading opening (6) on the payload container (7),
unlocking of the payload container (7) at a second, opposite end (14) of the same,
pivoting of the payload container (7) in relation to the horizontal by the loading device (8), such that the second end (14) is lowered in relation to the first end (8a) of the payload container (7) until the bearing means (9) no longer engages in the mating contour (20),
lowering of the payload container (7) in relation to the transport device (3) by the loading device (8), and
pivoting of the payload container (7) into the horizontal by the loading device (8).

9. Method according to one of the preceding claims, wherein the loading device (8) has a tilt cylinder (15) for pivoting of the payload container (7) and/or an actuator (23) for unlocking and/or locking of the payload container (7) to and/or from the transport device (3).

10. Method according to one of the preceding claims, comprising the steps:
removal and/or depositing of the payload container (7) from and/or in a storage position and/or a loading module (26) by the loading device (8),
opening and/or closing of a hatch (29) on a landing platform (2) of the receiving container (1) for the docking of the transport device (3) on the receiving container (1), and/or
positionally accurate fixing of the docked unmanned transport device (3) to the receiving container (1).

11. Method according to one of the preceding claims, wherein the payload container (7) has at its first end (8a) a nose bearing (10), and the loading opening (6) has at its front end (19) a nose contour (21) corresponding to the nose bearing (10).

12. Method according to one of the preceding claims, wherein the pivoting is realized through an angle of ≥ 5° and ≤ 50°.

13. Method according to one of the preceding claims, wherein the payload container (7) has a battery for powering the unmanned transport device (3), and the receiving container (1) has a device for charging the battery.

## Revendications

1. Procédé de chargement d'un dispositif de transport sans pilote (3) ayant atterri sur un contenant de réception (1), comprenant un contenant de charge utile (7) pour une expédition (4), un dispositif de chargement (8) pour charger le contenant de charge utile (7) dans le dispositif de transport (3), dans lequel le contenant de charge utile (7) présente à sa première extrémité (8a) un appui (9), le dispositif de transport (3) présente sur sa face inférieure (5) une ouverture de chargement (6) pour recevoir le contenant de charge utile (7), et l'ouverture de chargement (6) présente à son extrémité avant (19) un contour complémentaire (20) correspondant à l'appui (9), et le procédé présente les étapes consistant à :
faire pivoter par le dispositif de chargement (8) le contenant de charge utile (7) disposé sur le dispositif de chargement (8) par rapport à l'horizontale de telle sorte que la première extrémité (8a) est surélevée par rapport à une deuxième extrémité opposée (14) du contenant de charge utile (7),
soulever le dispositif de chargement (8) jusqu'à ce que le contenant de charge utile (7) vienne se loger par sa première extrémité (8a) à l'intérieur et/ou au-dessous de l'ouverture de chargement (6), et
faire pivoter par le dispositif de chargement (8) le contenant de charge utile (7) en position horizontale pour l'introduire dans l'ouverture de chargement (6) de telle sorte que dans un premier temps l'appui (9) vient en prise avec le contour complémentaire (20) et que par la suite la deuxième extrémité (14) du conteneur de charge utile (7) vient en prise avec une extrémité arrière (22) de l'ouverture de chargement (6).

2. Procédé selon la revendication précédente, comprenant les étapes consistant à :
après introduction du contenant de charge utile (7) dans l'ouverture de chargement (6), verrouiller par le dispositif de chargement (8) la deuxième extrémité du contenant de charge utile (7) avec le dispositif de transport (3), et/ou
après introduction du contenant de charge utile (7) dans l'ouverture de chargement (6), abaisser le dispositif de chargement (8) jusqu'à ce que le dispositif de chargement (8) soit disposé à l'intérieur du contenant de réception (1).

3. Procédé selon l'une quelconque des revendications précédentes, dans lequel le contenant de charge utile (7) et/ou l'ouverture de chargement (6) sont configurés de telle sorte que, pendant le pivotement en position horizontale et/ou dans la position horizontale, au moins la première extrémité (8a) du contenant de charge utile (7) est adjacente par complémentarité de forme au moins à l'extrémité avant (19) de l'ouverture de chargement (6).

4. Procédé selon l'une quelconque des revendications précédentes, dans lequel le dispositif de chargement (8) présente en correspondance avec la première extrémité (8a) et/ou la deuxième extrémité (14) du contenant de charge utile (7) un mandrin (17), le dispositif de transport (3) présente à l'extrémité avant (19) et/ou à l'extrémité arrière (22) une douille (18) correspondant au mandrin respectif (17), et le soulèvement du dispositif de chargement (8) est effectué de telle sorte que le mandrin (17) vient en prise dans la douille (18).

5. Procédé selon l'une quelconque des revendications précédentes, dans lequel le contenant de charge utile (7) présente à sa première extrémité (8a) un premier connecteur (11) et l'ouverture de chargement (6) présente à son extrémité avant (19) un deuxième connecteur (24) correspondant au premier connecteur (11), disposés de telle sorte que le pivotement du contenant de charge utile (7) en position horizontale relie les connecteurs (11, 24) l'un à l'autre.

6. Procédé selon la revendication précédente, dans lequel le deuxième connecteur (24) est monté flottant au niveau de l'ouverture de chargement (6) de telle sorte que le deuxième connecteur (24) est monté rigide dans le sens d'enfichage et monté élastique orthogonalement au sens d'enfichage.

7. Procédé selon l'une quelconque des deux revendications précédentes, dans lequel le premier connecteur (11) présente une plaque à cheville (13) et le deuxième connecteur (24) présente un logement de cheville (25), configuré(e) de telle sorte que le pivotement du contenant de charge utile (7) en position horizontale guide la cheville par le logement de cheville (25) de telle sorte que dans un premier temps une tolérance entre les connecteurs (11, 24) est diminuée, et par la suite un alignement exact des connecteurs (11, 24) l'un par rapport à l'autre est effectué.

8. Procédé de déchargement d'un dispositif de transport sans pilote (3) ayant atterri sur un contenant de réception (1), comprenant un contenant de charge utile (7) pour une expédition (4), un dispositif de chargement (8) pour décharger le contenant de charge utile (7) du dispositif de transport (3), dans lequel le contenant de charge utile (7) présente à sa première extrémité (8a) un appui (9), le dispositif de transport (3) présente sur sa face inférieure (5) une ouverture de chargement (6) dans laquelle le contenant de charge utile (7) est disposé, et l'ouverture de chargement (6) présente à son extrémité avant (19) un contour complémentaire (20) correspondant à l'appui (9) et dans lequel l'appui (9) vient en prise, et le procédé présente les étapes consistant à :
soulever le dispositif de chargement (8) jusqu'à ce que le dispositif de chargement (8) vienne se loger sur le contenant de charge utile (7) au-dessous de l'ouverture de chargement (6),
déverrouiller le contenant de charge utile (7) à une deuxième extrémité opposée (14) de celui-ci,
faire pivoter par le dispositif de chargement (8) le contenant de charge utile (7) par rapport à l'horizontale de telle sorte que la deuxième extrémité (14) est abaissée par rapport à la première extrémité (8a) du contenant de charge utile (7) jusqu'à ce que l'appui (9) ne soit plus en prise avec le contour complémentaire (20),
abaisser par le dispositif de chargement (8) le contenant de charge utile (7) par rapport au dispositif de transport (3), et
faire pivoter par le dispositif de chargement (8) le contenant de charge utile (7) en position horizontale.

9. Procédé selon l'une quelconque des revendications précédentes, dans lequel le dispositif de chargement (8) présente un vérin de basculement (15) pour faire pivoter le contenant de charge utile (7), et/ou un actionneur (23) pour déverrouiller le contenant de charge utile (7) du dispositif de transport (3) et/ou pour verrouiller le contenant de charge utile (7) sur le dispositif de transport (3).

10. Procédé selon l'une quelconque des revendications précédentes, comprenant les étapes consistant à :
retirer par le dispositif de chargement (8) le contenant de charge utile (7) d'une position de stockage et/ou d'un module de chargement (26) et/ou déposer par le dispositif de chargement (8) le contenant de charge utile (7) dans une position de stockage et/ou un module de chargement (26),
ouvrir et/ou fermer un hublot (29) sur une plateforme d'atterrissage (2) du contenant de réception (1) pour l'atterrissage du dispositif de transport (3) sur le contenant de réception (1), et/ou
fixer exactement au contenant de réception (1) le dispositif de transport sans pilote (3) ayant atterri.

11. Procédé selon l'une quelconque des revendications précédentes, dans lequel le contenant de charge utile (7) présente à sa première extrémité (8a) un palier à nez (10), et l'ouverture de chargement (6) présente à son extrémité avant (19) un contour de nez (21) correspondant au palier à nez (10).

12. Procédé selon l'une quelconque des revendications précédentes, dans lequel le pivotement est effectué selon un angle ≥5° et ≤50°.

13. Procédé selon l'une quelconque des revendications précédentes, dans lequel le contenant de charge utile (7) présente une batterie pour une alimentation électrique du dispositif de transport sans pilote (3), et le contenant de réception (1) présente un dispositif pour recharger la batterie.
